Europäisches Patentamt

European Patent Office

Office européen des brevets

(11) Publication number : **0 434 921 B1**

(12) # EUROPEAN PATENT SPECIFICATION

(45) Date of publication of patent specification :
28.12.94 Bulletin 94/52

(51) Int. Cl.⁵ : **H04B 1/40, H04B 17/00**

(21) Application number : **90119955.4**

(22) Date of filing : **18.10.90**

(54) **Radio with error logging function.**

(30) Priority : **29.11.89 GB 8927030**

(43) Date of publication of application :
**03.07.91 Bulletin 91/27**

(45) Publication of the grant of the patent :
**28.12.94 Bulletin 94/52**

(84) Designated Contracting States :
**DE FR GB IT**

(56) References cited :
**US-A- 4 823 280**

(73) Proprietor : **MOTOROLA A/S**
**Artillerivej 126**
**DK-2300 Copenhagen S (DK)**

(72) Inventor : **Plesner, Kenneth**
**Pibe Mollevej 21,**
**Alsonderup**
**DK-3400 Hillerod (DK)**
Inventor : **Jacobsen, Peter Carl Johan**
**Aarhusgade 79, 1.th**
**DK-2100 Copenhagen O (DK)**

(74) Representative : **Dunlop, Hugh Christopher et al**
**Motorola**
**European Intellectual Property**
**Midpoint**
**Alencon Link**
**Basingstoke, Hampshire RG21 1PL (GB)**

## Description

This invention relates to a radio, such as a two-way radio having processing means for controlling operation thereof.

### Summary of the prior art

Mobile and portable radios are known which comprise a microprocessor under software control for controlling operation of the radio. It is a problem with existing radios that they sometimes cease operation completely because of software errors.

International Patent Application No. WO86/03913 describes a radio system comprising a plurality of register modelled processors. Each element of the system, including the core processor, contains diagnostic drivers to test the integrity of the system. Diagnostic reporting is maintained through the control processor or "offline" via specialized test equipment. This is often referred to as Service Mode.

Prior art on-line error reporting is limited to displaying an error code on the control head at the time that an error occurs.

It would be desirable to provide a radio which allowed continued operation even when one or more sub-operations thereof is errored. It would also be desirable to facilitate later diagnosis of errors.

### Summary of the Invention

According to the present invention, there is provided a radio comprising: processing means for controlling operation of the radio by means of a plurality of sub-operations, a memory means for detecting errors and storing error codes in the memory indicative of errors and the sub-operations in which they have occurred, means for continuing operation of the radio after storing of one or more error codes (eg by means of sub-operations in which no significant error has occurred) and means for providing access to the error codes for read-out on a display. The sub-operations may be software sub routines (software programmes) or may be interactive operation of hardware devices under software control.

Its preferred that the access to the error codes comprises means for connecting diagnostic apparatus to the radio, eg by means of a releasable connector, means for displaying the error codes when the diagnostic apparatus is connected to the radio, and means for prohibiting the display of the error codes when no diagnostic apparatus is connected to the radio. In this manner, the user is kept unaware of the fact that one or more errors has occurred and as far as the user is concerned there may be no apparent malfunction, depending of the nature of the error. For a more serious error, the user may merely notice that the radio sometimes restarts operation or that certain functions of the radio are inoperative.

The error codes may indicate the nature of the error the sub-operation in which the error occurred and the line of the program code of which the error occurred, thereby facilitating servicing of the radio by a service engineer.

The error codes are preferably stores in non-volatile EEPROM. This has the advantage that a history of error codes can build up over a long period of operation of the radio.

The invention has the advantages of enabling rapid diagnosis, isolation and solution of software errors occurring during use of the radio by the user in its operational environment.

### Brief description of the drawing

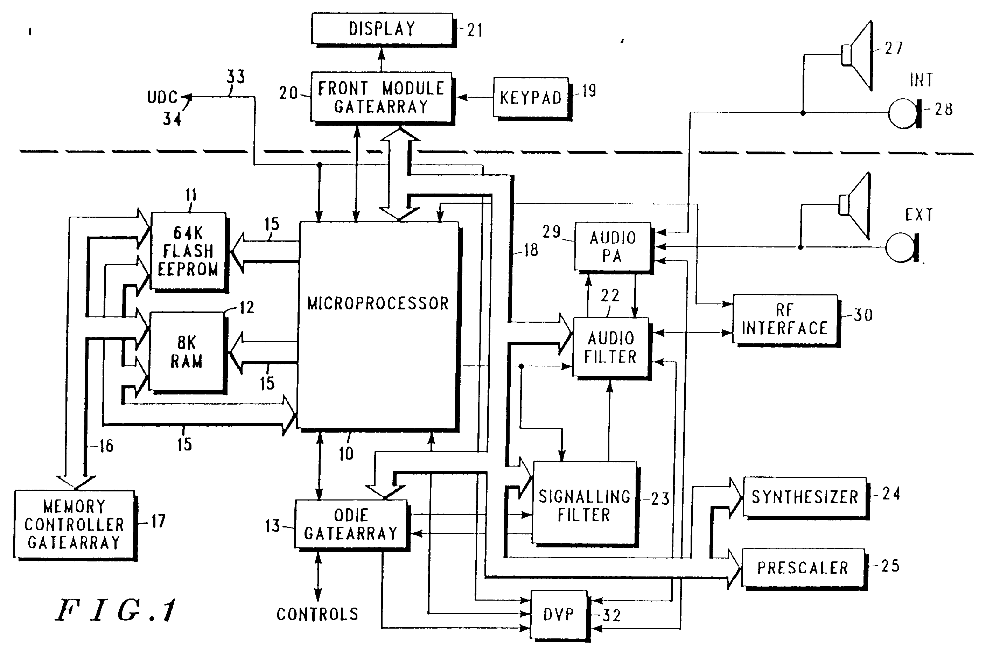

Figure 1 shows a block diagram of the control circuitry of a radio in accordance with the present invention.

### Detailed description of the preferred embodiment.

Referring to Figure 1 there is shown a radio controller for a two-way way radio, particularly intended for use on a trunked radio system. The controller comprises a microprocessor 10, preferably of the type 68C11A8 manufactured by Motorola Inc. Connected to the microprocessor 10 is a 64K/EEPROM memory 11, and 8K RAM memory 12 and a first gatearray 13 for frame detection, and decoding of 1200 band FSK binary signals and input/output expand operations. The memories 11 & 12 are connected to the microprocessor 10 by data buses 15. Connected to the memories 11 & 12 via an address bus 16 is a second gatearray 17 for memory control, including sequential tone decoding and private line decoding. The gatearray 17 also performs an interface function between microprocessor 10 and the EEPROM and RAM by means of a memory expand circuit.

A synchronous bus 18 connects the microprocessor 10 to a display 21 (with display driver) and keypad 19 via front module gatearray 20. The synchronous bus 18 also connects the microprocessor to an audio filter 22, a signalling filter (SFIC) 23, a synthesizer 24 and a prescaler 25. A loudspeaker 27 and a microphone 28 are connected to the audio filter 22 via audio power amplifier 29. The microprocessor 10 and audio filter 22 are connected to an RF interface 30. A digital voice privacy (dvp) circuit 32 is provided, connected to the microprocessor 10 the first gatearray 13, the audio filter and amplifier 22 & 29 and an asynchronous bus 33. The asynchronous bus 33 has a universal device connector (UDC) 34. Various controls (not shown) are provided, connected to the first gatearray 13. The controls include channel selectors, a push-to-talk (PTT) button and a private line enable/disable button.

Programmed into the on-chip ROM of the microprocessor 10 (or provided in separate ROM memory) is an operating system of the type OS11 supplied by ENEA DATA. This operating system supports a number of parallel processes in the microprocessor. Examples of such processes are: timer process, audio process, display process, control radio process, self test process, keyboard process, digital voice processing.

In the carrying out of the various processes, errors may occur. Errors can broadly be divided into two categories: warnings and fatal errors.

When a process detects an error situation, but that error is not so severe that the process cannot continue, the error is categorised as a warning. The process logs a warning consisting of an error code (byte) and a process number (also a byte). This is done by invoking an error logging routine in the operating system. The error logging routine fetches the information about the process number from a global variable held and updated by the operating system. The bytes are logged and the operating system returns to the calling process.

In the case of an error which is so severe that the process should not be allowed to continue, the same steps are taken, however no return is made to the calling process, but instead a hardware reset of the radio is performed. A sequence of warnings could give rise to a fatal error, in which case a hardware reset would be made. For example, where the sequence of warnings resulted from incorrect data and/or operation which would cause the radio to transmit on unauthorised frequencies. The hardware reset would prevent unauthorised transmissions.

There follows a specific example of warning and of a fatal error that can be logged.

Warning - at power on, the self test process among other things performs ROM and internal RAM tests on the 68HC11 microprocessor. The test involves creation of a check sum and comparison with an expected value. If an error occurs in the check sum, this is logged as a warning, but the application continues. (Of course, the fatal error may be logged later on as a result of the ROM or internal RAM check fail.)

Fatal error - a part of the flash EEPROM 11 is reserved to a code plug (which may be considered "personality") this code plug describes how the software control of the radio is to work. If an error is detected in this code plug, a fatal error is logged. If the code plug error is connected to a specific use of the radio, the radio will still work after reset caused by the fatal error logging, provided that the radio is not used in the specific way that caused a fatal error.

The process error codes are bytes divided into 5 groups:

1. OS11 detected fatal errors - 0-70
2. Generic fatal errors          - 71-110
3. Generic warnings          - 111-150
4. Process specific fatal errors          - 151-200
5. Process specific warnings          - 201-255

There follows two examples of generic error codes.

Bad error code          - 7 1  -  unknown  error  code

Illegal  personality          - 1 1 1 -  illegal  personality  data

There follows some examples of process specific error codes. These codes lie in the range 151 to 255. Every process can use these error codes. The meaning connected with the code being dependent on the process reporting it.

Error codes and warning for control radio process:

| Illegal action | - 201 - | illegal action specified in state-event table. |
| Illegal state | - 202 - | illegal state specified in state-event table. |
| Illegal input CMD | - 203 - | illegal input demand received by central radio process |

Error codes and warnings for signalling process:

| Illegal parameter | - 204 - | illegal function input parameter |
| Illegal-SEQ.DEC.CMD | - 151 - | illegal command to the sequence decoder |
| Fatal-input CMD | - 152 - | illegal command to the signalling process |
| Illegal DTD type | - 153 - | illegal dtd type specified to the set-tone function |
| Invalid-parameter | - 201 - | illegal parameters to the signal decode or sequence oncode function |
| Illegal-action requested | -202 | - illegal action requested in dtd1-update or dtd2-update |
| Illegal-PL-ENC input | -203 | - Private line input clock Clock-parameter out of range |
| Illegal-PL-ENC parameters | -204 | - inproper private line encoding command |

Error codes and warnings for display process:

| Illegal-display-CMD | - 201 - | illegal display command sent to display processor |
| Illegal-DSP-Params | - 202 - | error in display command parameters out of specified range |
| Error-in-DSP-timer | - 203 - | error in display timer an unexpected completion code was returned from the timer process |

Error codes and warnings for audio-process:

4

Illegal-aud-command   -201 - illegal command sent to audio process

llegal-aud-alert   - 202 - illegal alert type parameter in command sent to audio processor

Illegal-aud-volume   - 203 - illegal volume level parameter in command sent to audio processor

Error codes and warnings for self test-process:

Illegal-slf-command   - 201 - illegal command sent to self test process

ROM-error   - 202 - ROM error detected

INT-RAM-error   - 203 - internal RAM error detected

EXT-RAM-error   - 204 - external RAM error detected

FR-EEPROM-error   - 205 - flash EEPROM error detected

Personality-error   - 206 - bad personality version detected

Error codes and warnings for keyboard-process:

K-illegal-action   - 201 - illegal action specified in state-event table.

K-illegal-state   - 202 - illegal state specified in state-event table or in state prehandling.

K-illegal-input-CMD   - 203 - illegal input command received by keyboard process

K-unknown-key   - 204 - illegal key detected

Error codes and warnings for dvp-process:

Illegal-DVP-CMD   - 201 - illegal command to dvp process

Error codes and warnings for timer-process:

Illegal-timer-CMD      - 201 - illegal command

The input parameter to the error logging routine is the same as the input parameter to the local function (perror) in each process. This code will, together with the identifier (the process identifier information is provided by OS11) of the calling process, be stored into one of the two buffers located in the EEPROM.

These two buffers have both the size of 2 * 50 bytes. The first buffer is located from B72C to B78F and will contain fatal errors that will reset the radio. This is done by letting the error process go into an infinite loop, and then the reset is performed by software watchdog. The other buffer located from B790 to B7F3 will contain the less serious errors (warnings). After storing warnings a return to the calling process will be executed. If more than 50 errors are reported in any of the two categories, the errors from 51 and upwards are neglected.

The pointers to the buffers are located respectively at B72A and B72B. These are two (one byte) offset pointers. They must point into the first free byte of their buffer. The contents of B72A and B72B will then be zero, before any errors are detected.

The pointers can only be cleared by explicit writing into the EEPROM via service mode functions.

It is a particular advantage of the present invention that the error codes are readily available to a service engineer. The service engineer merely has to connect diagnostic equipment to the universal data connector 34 and perform a read operation of the contents of the EEPROM 11 through the microprocessor 10. The service engineer contains a complete read out of the contents of the two buffers showing the error codes and the processors reporting them. These can be displayed on a screen or printed out. The error codes are not made available to the radio user on the display 18 so that the user need never know that there have been any errors, however, it would be a minor modification to provide a function which allowed this read-out on the display 18. As an alternative, some sort of a key (eg. connectable to the connector 34) could be provided to allow the service engineer to initiate a read-out of the error codes on the display 18.

The above description has been given by way of example only and modification of detail can be made within the scope of the invention.

**Claims**

1.  A radio comprising:
    processing means for controlling operation of the radio by means of a plurality of sub-operations, said sub-operations being either software sub-routines or interactive operation of hardware devices under software control,
    a memory,
    means for detecting errors and storing error codes in the memory indicative of errors and the sub-operations in which they have occurred,
    means for continuing operation of the radio by means of sub-operations in which no significant error has occurred and
    means for providing access to the error codes for read-out on a display.

2.  A radio according to claim 1, comprising means for connecting diagnostic apparatus to the radio, means for displaying the error codes when the diagnostic apparatus is connected to the radio and means for prohibiting display of the error codes when no diagnostic apparatus is connected to the radio.

3.  A radio according to claim 2, wherein the means for connecting comprises a releasable connector.

4.  A radio according to either of claims 1 and 2, wherein the memory is an electrically-erasable non-volatile read only memory.

5.  A method of operation of a radio comprising the steps of:
    carrying out operation of the radio by means of a plurality of functional sub-operations, said sub-operations being either software sub-routines or interactive operation of hardware devices under software control;
    storing an error code in memory indicative of a sub-operation that becomes non-functional and the error which has caused it to become non-functional; and
    continuing operation of the radio after storing of the error code by means of sub-operations where no significant error has occurred.

6. A method according to claim 5, comprising the further step of initiating an error code read-out operation to provide access to error codes stored in the memory for display.

7. A method according to claim 5, wherein the error read-out operation comprises connecting diagnostic apparatus to the radio, said apparatus having a display, reading the contents of the memory to the diagnostic apparatus and displaying the error code on the display thereof.

8. A method according to claim 5 or 6, wherein the error code indicates, as well as the error and the sub-operation in which the error occurred, the line of program code at which the error occurred.

9. A method according to any one of claims 5 to 8 wherein the display of error codes is prohibited without connection to diagnostic apparatus to the radio.

**Patentansprüche**

1. Funkgerät, das umfaßt:
   eine Verarbeitungseinrichtung, die die Funktion des Funkgerätes mittels einer Vielzahl von Teiloperationen steuert, wobei die Teiloperationen entweder Software-Teilprogramme oder die softwaregesteuerte interaktive Operation von Hardware-Einrichtungen sind,
   einen Speicher,
   eine Einrichtung, die Fehler erfaßt und Fehlercodes in dem Speicher speichert, die Fehler und die Teiloperationen, in denen sie aufgetreten sind, anzeigen,
   eine Einrichtung, die den Betrieb des Funkgerätes mittels Teiloperationen, in denen kein erheblicher Fehler aufgetreten ist, fortsetzt und
   eine Einrichtung, die Zugang zu den Fehlercodes zur Ausgabe auf einer Anzeige gewährt.

2. Funkgerät nach Anspruch 1, das eine Einrichtung zum Anschluß einer Diagnosevorrichtung umfaßt, eine Einrichtung, die die Fehlercodes anzeigt, wenn die Diagnosevorrichtung an das Funkgerät angeschlossen ist, sowie eine Einrichtung, die die Anzeige der Fehlercodes unterbindet, wenn keine Diagnosevorrichtung an das Funkgerät angeschlossen ist.

3. Funkgerät nach Anspruch 2, wobei die Einrichtung zum Anschluß eine lösbare Steckverbindung umfaßt.

4. Funkgerät nach den Ansprüchen 1 und 2, wobei der Speicher ein elektrisch löschbarer, nichtflüchtiger Festwertspeicher ist.

5. Verfahren zum Betrieb eines Funkgerätes, das die folgenden Schritte umfaßt:
   Ausführung des Betriebes des Funkgerätes mittels einer Vielzahl von funktionellen Teiloperationen, wobei die Teiloperationen entweder Software-Teilprogramme oder die softwaregesteuerte interaktive Operation von Hardware-Einrichtungen sind;
   Speichern eines Fehlercodes in einem Speicher, der eine Teiloperation, deren Funktion ausfällt, sowie den Fehler anzeigt, der dazu geführt hat, daß ihre Funktion ausfällt; und
   Fortsetzen des Betriebes des Funkgerätes nach dem Speichern des Fehlercodes mittels Teiloperationen, wenn kein erheblicher Fehler aufgetreten ist.

6. Verfahren nach Anspruch 5, das den weiteren Schritt des Auslösens eines Fehlercodes-Ausgabevorgangs umfaßt, um auf die in dem Speicher gespeicherten Fehlercodes zuzugreifen und sie anzuzeigen.

7. Verfahren nach Anpruch 5, wobei der Fehlerausgabevorgang das Anschließen einer Diagnosevorrichtung an das Funkgerät umfaßt, wobei die Vorrichtung eine Anzeige aufweist, die den Inhalt des Speichers an die Diagnosevorrichtung ausgibt und den Fehlercode auf der Anzeige derselben anzeigt.

8. Verfahren nach Anspruch 5 oder 6, wobei der Fehlercode sowohl den Fehler und die Teiloperation, in der der Fehler aufgetreten ist, als auch die Zeile des Programmcodes anzeigt, in der der Fehler aufgetreten ist.

9. Verfahren nach einem der Ansprüche 5 bis 8, wobei die Anzeige von Fehlercodes ohne Anschluß einer Diagnosevorrichtung an das Funkgerät unterbunden wird.

**Revendications**

1. Dispositif radio comprenant :
   un moyen de traitement servant à commander le fonctionnement du dispositif radio au moyen d'une pluralité de sous-opérations, lesdites sous-opérations étant soit des sous-programmes du logiciel, soit des opérations interactives de dispositifs matériels sous commande du logiciel,
   une mémoire,
   un moyen servant à détecter des erreurs et à mémoriser dans la mémoire des codes d'erreur indicatifs d'erreurs ainsi que les sous-opérations dans lesquelles elles se sont produites,
   un moyen servant à faire poursuivre le fonctionnement du dispositif radio au moyen de sous-opérations dans lesquelles aucune erreur importante ne s'est produite, et
   un moyen servant à donner accès aux codes d'erreur en vue de leur lecture sur un dispositif d'affichage.

2. Dispositif radio selon la revendication 1, comprenant un moyen servant à connecter un appareil de diagnostic au dispositif radio, un moyen servant à afficher les codes d'erreur lorsque l'appareil de diagnostic est connecté au dispositif radio, et un moyen servant à interdire l'affichage des codes d'erreur lorsqu'aucun appareil de diagnostic n'est connecté au dispositif radio.

3. Dispositif radio selon la revendication 2, où le moyen de connexion comprend un connecteur amovible.

4. Dispositif radio selon la revendication 1 ou 2, où la mémoire est une mémoire morte non volatile électriquement effaçable.

5. Procédé permettant de faire fonctionner un dispositif radio, qui comprend les étapes suivantes :
   réaliser la mise en oeuvre du dispositif radio au moyen d'une pluralité de sous-opérations fonctionnelles, lesdites sous-opérations étant soit des sous-programmes de logiciel, soit des opérations interactives de dispositifs matériels sous commande du logiciel ;
   mémoriser dans une mémoire un code d'erreur indicatif d'une sous-opération devenant non fonctionnelle ainsi que l'erreur qui l'a amenée à devenir non fonctionnelle ; et
   faire poursuivre le fonctionnement du dispositif radio après la mémorisation du code d'erreur au moyen de sous-opérations dans lesquelles aucune erreur importante ne s'est produite.

6. Procédé selon la revendication 5, comprenant l'étape supplémentaire qui consiste à faire commencer une opération de lecture de code d'erreur pour donner accès aux codes d'erreur mémorisés dans la mémoire en vue de l'affichage.

7. Procédé selon la revendication 5, où l'opération de lecture d'erreur consiste à connecter l'appareil de diagnostic au dispositif radio, ledit appareil possédant un moyen d'affichage, à lire le contenu de la mémoire pour l'envoyer à l'appareil de diagnostic, et à afficher le code d'erreur sur son moyen d'affichage.

8. Procédé selon la revendication 5 ou 6, où le code d'erreur indique, ainsi que l'erreur et la sous-opération dans laquelle l'erreur s'est produite, la ligne du code de programme à laquelle l'erreur s'est produite.

9. Procédé selon l'une quelconque des revendications 5 à 8, où l'affichage des codes d'erreur est empêché en l'absence de connexion de l'appareil de diagnostic au dispositif radio.

FIG.1

EP 0 434 921 B1